# EUROPEAN PATENT SPECIFICATION

(11) **EP 3 529 446 B1**
(45) Date of publication and mention of the grant of the patent: **28.05.2025**
(21) Application number: 17862950.7
(22) Date of filing: 11.10.2017
(51) Int. Cl.: E06B 3/663, E06B 3/66, E06B 3/667, E06B 3/67, E06B 3/673, E06B 3/677, C03C 27/06

(54) **SPACER FOR TRANSLUCENT PANELS AND METHOD FOR MANUFACTURING THE SPACER**
ABSTANDSHALTER FÜR DURCHSICHTIGE TAFELN UND HERSTELLUNGSVERFAHREN DES ABSTANDHALTERS
ESPACEUR POUR DES PANNEAUX TRANSLUCIDES ET PROCÉDÉ POUR LA FABRICATION D'UN ESPACEUR

(30) Priority: 18.10.2016 US 201662409616 P
(43) Date of publication of application: 28.08.2019
(73) Proprietor: P.E.T. Polymer Extrusion Technology, Inc., Pompano Beach, FL 33069 (US)
(72) Inventor: HOWES, Stephen, E., Davie, FL 33325 (US); REICHERT, Gerhard, New Philadelphia, OH 44663 (US)
(74) Representative: Reddie & Grose LLP
(86) International application number: PCT/US2017/056023
(87) International publication number: WO 2018/075300

(56) References cited:
- EP-A1- 0 596 677
- EP-A2- 0 283 971
- WO-A1-2011/008860
- US-A- 3 919 023
- US-A- 4 400 338
- US-A- 4 951 927
- US-A- 4 965 117
- US-A- 5 007 217
- US-A- 5 085 815
- US-A1- 2001 030 018
- US-A1- 2004 258 859
- US-A1- 2007 178 256
- US-A1- 2009 272 483
- US-A1- 2009 301 008
- US-A1- 2012 137 608
- US-A1- 2014 373 473

## Description

### Technical Field

The present invention relates to a method for manufacturing insulating spacers for translucent panels of material such as glass and to a spacer comprising a two component flexible thermoset polymer.

### Background

Insulating translucent barriers, such as windows and door lites, typically consist of at least two parallel panels of glass or plastic spaced apart by a spacer sealed around the periphery of the panels of glass or plastic. The translucent panels may have various levels of transparency depending, for example, on whether decorative or privacy effects are desired. A sealed space of air or inert gas is formed within the insulating translucent panel assembly and helps maintain the temperature difference between the interior side of the barrier and the exterior side of the barrier. Developments in the field of insulating translucent barriers for the past thirty years have included the spacers used to hold the parallel panels of glass or plastic in spaced apart relation.

Early spacers were formed from hollow metal bars filled with a desiccant material that would keep the sealed space within the insulating translucent barrier dry. The high thermal conductivity between panels of glass or plastic led to misting or fogging problems in extreme weather conditions, and this led to improved spacers. Some spacers combined a desiccant foam material with a moisture barrier to remove most of the thermal conduction between the panels of glass or plastic at the glazing edge zone.

The sealing ability of spacers is crucial to reducing the misting or fogging problems noted previously and maintaining the insulating gas between the panels. However, known manufacturing methods are not conducive to consistently providing spacers that have exact measurements. For example, conventional methods for manufacturing spacers conventionally begin with an extrusion process in which dies are designed to extrude a spacer of specific width dimensions, for example 12.7 mm (1/2 inch) or 15.9 mm (5/8 inch) However, the extrusion process is not always exact and the industry standard allows for up to 5% tolerance in dimension variance. Furthermore, downstream processes, such as the application of a vapor barrier and/or curing, can create still greater alterations in the shape and dimensions of the extruded material. The slightest change in the spacer dimensions, even those spacers manufactured within but at the higher end of the 5% tolerance allowance, can be detrimental to the final sealing capability of the spacer. Therefore, it is desirable to improve the manufacturing method and systems to maintain tighter tolerances in the manufacturing of spacers and to simplify the process and reduce overall expense.

Additionally, when a changeover of process is necessary, such as when the manufacture of a different size or type of spacer is desired, the entire manufacturing process must be stopped and the extrusion die changed out before manufacturing continues. The process of stopping the extrusion and changing out the die are time consuming and greatly decrease productivity. Thus, it would be desirable to have a system that can be easily switched between spacer types when a different size is desired.

EP 0283971 discloses a multiple glazed unit including a pair of glass sheets maintained in spaced-apart relationship to each other by a spacer element to provide an airspace therebetween and a sealing element to hermetically seal the airspace, is characterized by a spacer element containing a dehydrating material and an unplasticized polymeric material which is the reaction product of a polyisocyanate and an active hydrogen containing material; and a sealing element containing an unplasticized polymeric material which is the reaction product of a polyisocyanate and an active hydrogen containing material; the polymeric material of the spacer element having a moisture vapor transmission rating which is greater than that of the polymeric material of the sealing element. US5007217A discloses a prefabricated foam spacer of the prior art.

### Summary

Various additional objectives, advantages, and features of the invention will be appreciated from a review of the following detailed description of the illustrative embodiments taken in conjunction with the accompanying drawings.

The invention is defined by the claims

### Brief Description of the Drawings

The accompanying drawings, which are incorporated in and constitute a part of this specification, illustrate embodiments of the invention and, together with a general description of the invention given above, and the detailed description given below, serve to explain the invention.
Fig. 1 is a top view schematically illustrating a manufacturing line for a spacer constructed in accordance with one illustrative embodiment of the invention.
Fig. 2 is a perspective view illustrating the vapor barrier of the spacer.
Fig. 3A is a cross sectional view taken along line 3A-3A of Fig. 2.
Fig. 3B is a cross sectional view similar to Fig. 3A, but schematically illustrating the scoring operation used for subsequently forming respective lips along the outer edge portions.
Fig. 3C is a view similar to Fig. 3A, but schematically illustrating the outer edge portions being folded upwardly.
Fig. 3D is a view similar to Fig. 3C, but illustrating the outer edge portions folded upward.
Fig. 3E is a view similar to Fig. 3D, but schematically illustrating the formed tray being filled with an extrudate.
Fig. 3F is a view similar to Fig. 3E, but schematically illustrating a process of curing the extrudate.
Fig. 3G is a view similar to Fig. 3F, but schematically illustrating an initial process of cutting the extrudate into longitudinal strips.
Fig. 3H is a view similar to Fig. 3G, but illustrating the removal of the outer edge portions.
Fig. 3I is a view similar to Fig. 3H, but illustrating the separated spacer strips.
Fig. 3J is a view similar to Fig. 3I, but further illustrating the application of adhesive to outer edge surfaces of one of the spacer strips.
Fig. 3K is a perspective view illustrating the spacer strip and adhesive application of Fig. 3J.
Fig. 3L is a perspective view showing a subsequent step of applying a peel away protective backing to outer edge portions of the spacer strip.
Fig. 4 is a perspective view showing a pair of translucent panels separated by a window spacer constructed in accordance with an illustrative embodiment of the invention.
Fig. 5 is a cross sectional view taken along line 5-5 of Fig. 4.
Fig. 6 is a fragmented perspective view illustrating the assembly of Fig. 5.
Fig. 7 is a perspective view more specifically illustrating the portion of the manufacturing line for scoring and forming the outer edge lip portions of the vapor barrier.
Fig. 7A is an enlarged perspective view of the corrugated vapor barrier being formed with the outer edge lip portions.
Fig. 8 is a perspective view more specifically illustrating the cutting station of the manufacturing line.
Fig. 9 is a partial disassembled perspective view of a cutting head.
Fig. 10 is a side cross sectional view illustrating one of the cutting heads angled downwardly into a cutting position and the other cutting head raised into a position out of engagement with the extrudate.
Fig. 11 is a perspective view of an optional infrared heating lamp module.

### Detailed Description of Illustrative Embodiments

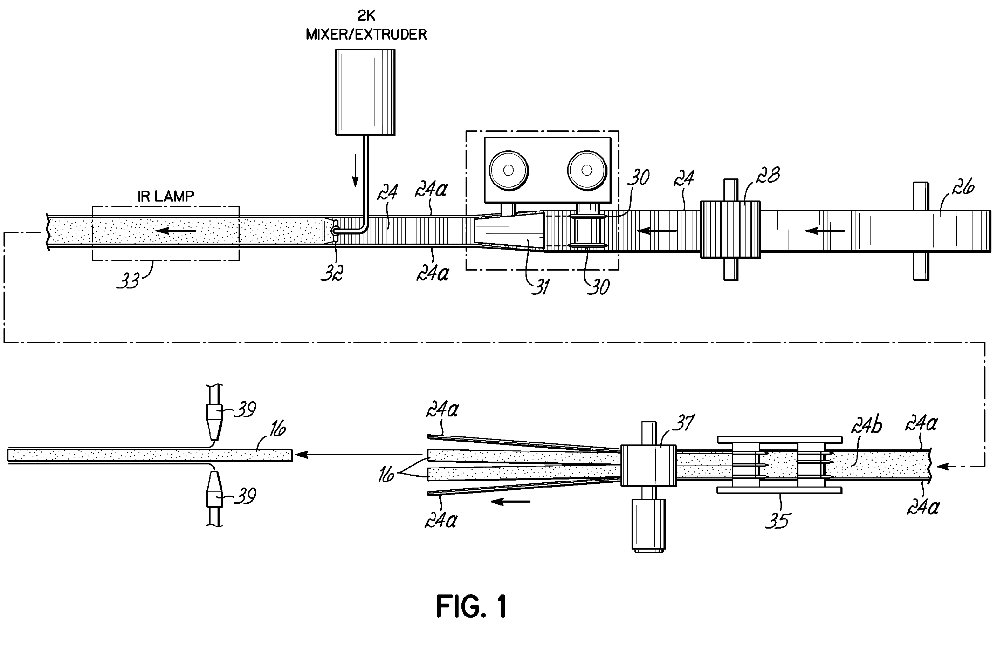

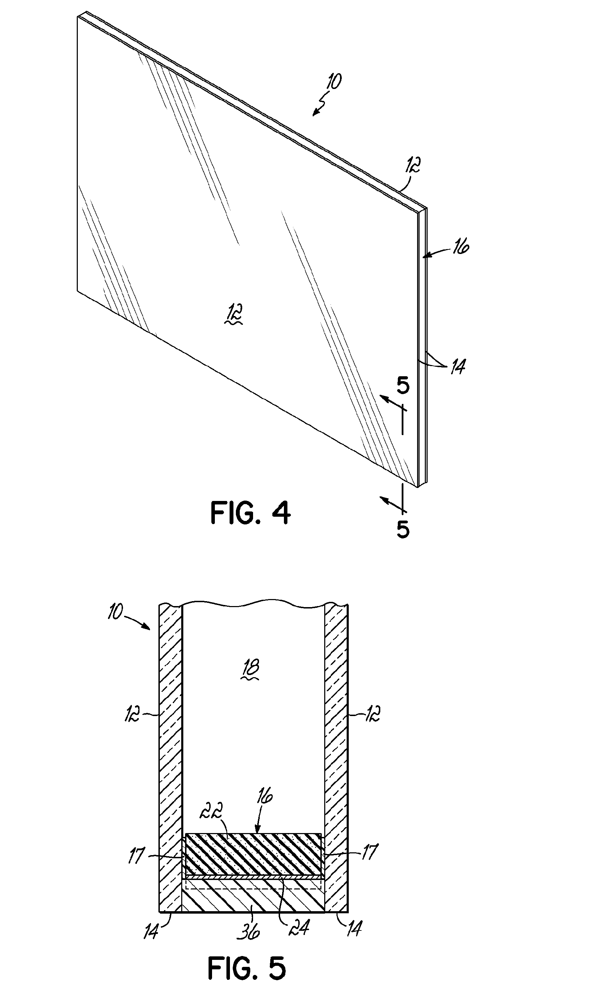

FIG. 1 illustrates a production or manufacturing line for a spacer constructed in accordance with one illustrative embodiment of the invention. As further shown in FIGS. 4-6, one embodiment of an insulating translucent panel assembly 10 includes first and second translucent panels 12 positioned in a parallel and spaced-apart relation to each other. The translucent panels 12 can be conventional sheets of glass or plastic as typically used in residential or commercial windows and door lites. Although the translucent panels 12 shown are rectangular, one skilled in the art will realize the shape and other dimensional or design characteristics of the translucent panels can be modified without departing from the inventive scope. Also, more than two panels 12 may be used. Further exemplary or illustrative details for the manufacturing of insulating translucent panel assemblies are provided in U.S. Patent Application Ser. No. 12/892,087. The translucent panels 12 comprise a periphery or outer edges 14 to be sealed together. The insulating translucent panel assembly 10 includes a spacer 16 applied to the periphery of the translucent panels 12 by thin layers of adhesive 17. The translucent panels 12 and the spacer 16 then form a sealed space 18 containing air or inert gas between the translucent panels 12. This sealed space 18 improves the thermal transfer properties of the insulating translucent panel assembly 10. A secondary sealant 36 such as hot melt adhesive, may be applied as shown in FIG. 5. Generally, the spacer 16 comprises an extrudate 22 and a vapor barrier 24 affixed to each other as a unitary structure or assembly. The vapor barrier 24 is shown as a flexible, corrugated thin metal, such as 304 stainless steel of about 2 mil thickness although other thicknesses, materials and configurations may be used. The corrugated design allows the vapor barrier 24 and attached extrudate 22 to bend in three dimensions for easier manipulation during manufacture of the assembly, and better sealing ability. At the location where two ends of the extrudate/vapor barrier assembly 22, 24 come together, an extension of the corrugated vapor barrier 24 may be exposed or extended from the extrudate 22 and overlap against a vapor barrier portion which had previously been attached to the extrudate 22. The extension (not shown) and vapor barrier portion 24 may be adhesively secured to each other using a suitable adhesive for the application needs. The extrudate 22 maintains dryness in the sealed space and isolates the sealed space from the outside atmosphere.

Referring to FIG. 1, at an upstream end of the manufacturing line a roll of stainless steel sheet material 26 is directed into a corrugation station which comprises a pair of gears 28 that rotate very close to one another essentially in meshing engagement to form corrugations in the very thin stainless steel material 26, to be discussed further below. The corrugations may be, for example, 1.6-3.2 mm (1/6" - 1/8") peak-to-peak and in height. The thin stainless steel corrugated material 24 then enters a scoring station where two circular rotating blades 30 very slightly score portions of the corrugated stainless steel material 24 approximately 4.8 mm (3/16 inch) from each side lengthwise edge of the corrugated stainless material 24. The blades 30 may be motorized to rotate in a direction opposite to the production line direction. The scored vapor barrier 24 then enters a lip forming station 31 at which the outer edge portions 24a of the vapor barrier 24 are turned upward at a fold line defined along the score lines previously formed by the pair of circular blades 30. This forms the vapor barrier 24 into a tray having turned up outer lip edge portions 24a for receiving an extrudate pumped onto the vapor barrier at an extrusion station. The extrudate is pumped through a flat nozzle 32 from a 2K mixer/extruder (discharging a two component extrudate of a flowable mixed thermoset resin/polymer desiccant matrix material to be detailed hereinbelow). Specifically, the following nozzle may be used: 4" LG13/4" x 1/8" sold by Techcon Systems, Cypress, California. The extrudate 22 and vapor barrier 24 then travels along the production line and, if necessary, may be selectively heated by one or more IR (infrared) lamp modules 33 to maintain an optimal curing temperature.

The extrudate 22 used in this illustration is discussed and disclosed more specifically below, and has been formulated to cure at approximately room temperature, depending on the manufacturing plant location and conditions. As necessary, one or more IR (infrared) lamp modules 33 or other heating means may be used to ensure that the extrudate 22 is maintained at a consistent temperature. Finally, when the extrudate 22 has sufficiently cured, the vapor barrier 24 and extrudate 22 is directed through a cutting station 35 by a puller 37 where the outer lip portions 24a are cut from the central region 24b and one or more spacer strips 16 are formed as shown at the downstream end of the manufacturing line. Then, either along the same manufacturing line, or at another location, pressure sensitive adhesive is applied by extruders 39 to the lengthwise edge portions as further shown in FIG. 1, and discussed below.

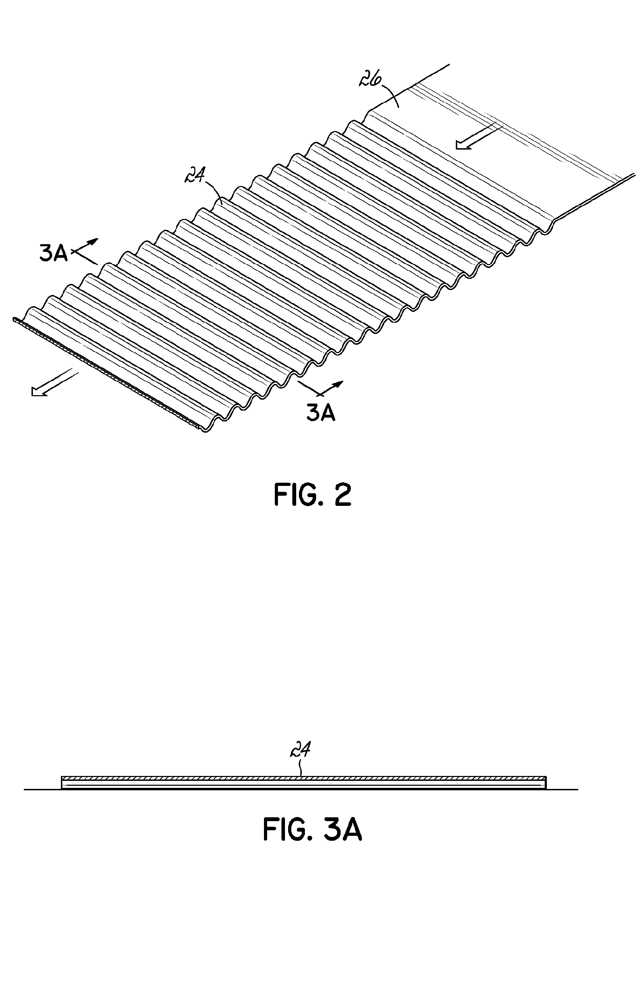

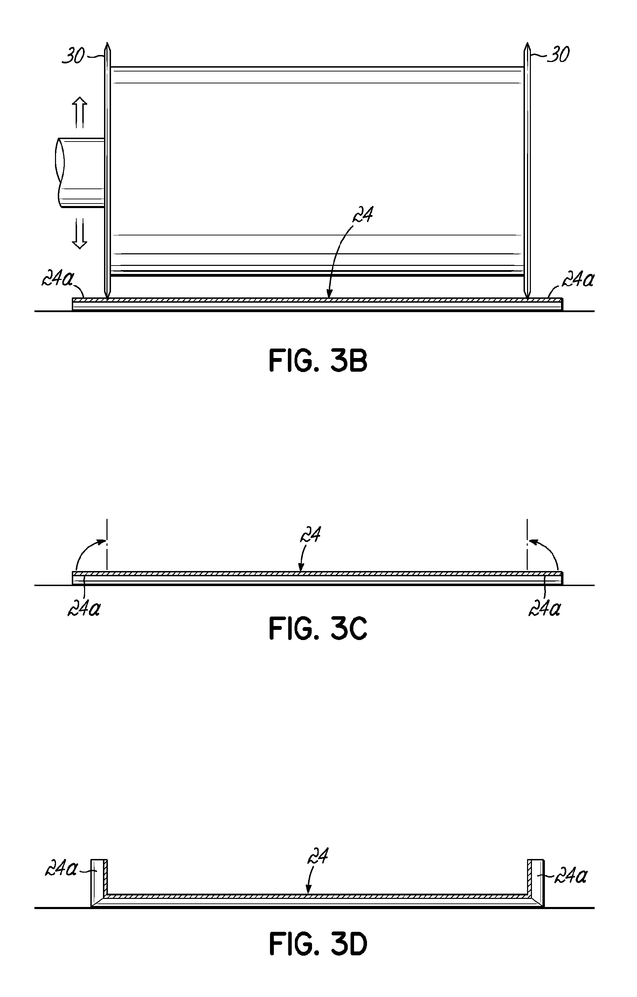

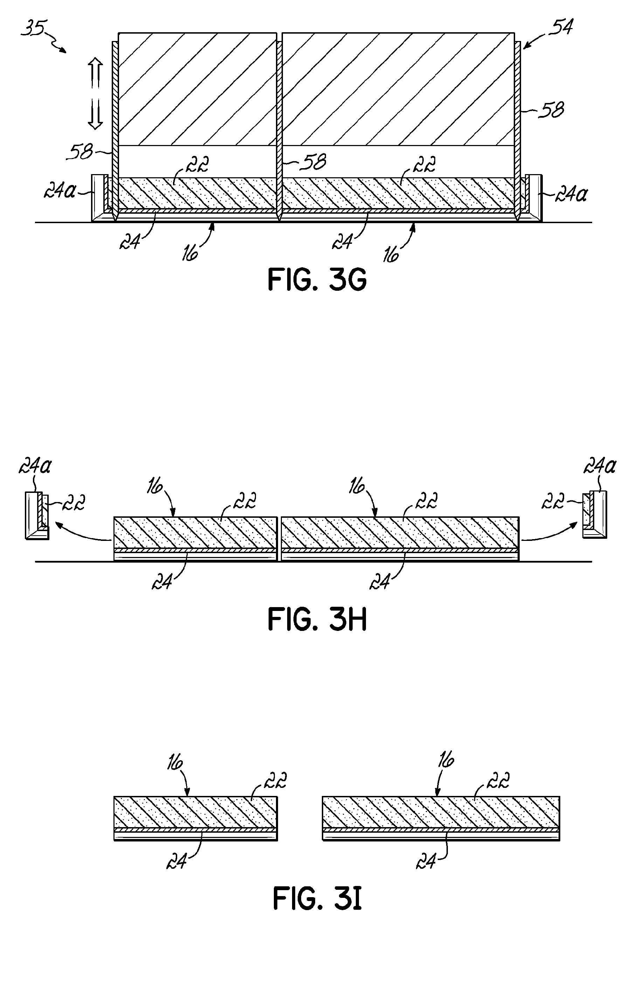

FIG. 2 is a perspective view of the illustrative corrugated vapor barrier 24 material before the outer edge portions have been turned up to form lips 24a that will ultimately contain the extruded two part thermoset polymer 22. FIG. 3A is a cross section taken along line 3A-3A of FIG. 2. The specific material used in this illustration is a very thin, for example, 2 mil thick 304 stainless steel, however, it will be appreciated that many other metallic and/or nonmetallic materials may be used instead. Nonmetallic, multilayer vapor barrier materials used for window spacers in the past may be used in various embodiments of the present invention. FIGS. 3B, 3C and 3D schematically illustrate the scoring operation of the corrugated stainless steel material 24 and the subsequent lip formation at the lengthwise outer edge portions 24a of the vapor barrier. As shown in FIG. 3D, this essentially forms a shallow tray about 3/16" deep for containing the extrudate 22. The width of the tray may be varied, as well as the height of the lips 24a. The width will be chosen depending on the desired width and number of spacers 16.

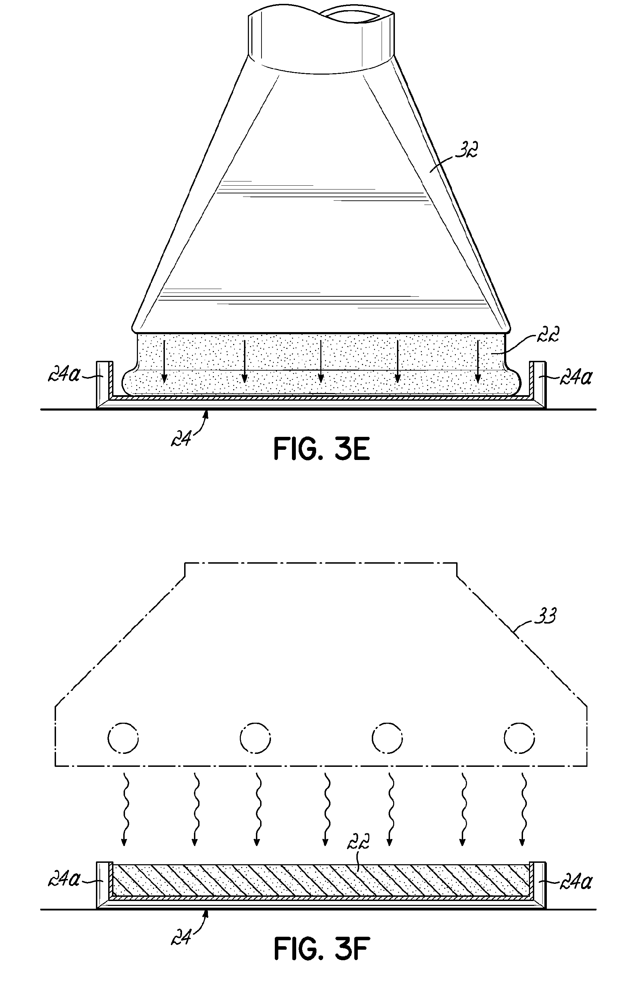

FIG. 3E is a close-up end view of the operation of extruding the two-part thermoset, desiccant containing polymer material from a nozzle 32 into the vapor barrier tray 24, 24a formed in the steps shown in FIGS. 3B through 3D.

FIG. 3F schematically illustrates the cured state of the extrudate 22 which has filled the tray 24, 24a to a consistent, essentially flat level and, in dash-dot lines, the use of infrared heat from one or more IR (infrared) lamp module 33 is shown to optionally maintain the temperature along these portions of the production line consistent, for example at approximately 80°F.

FIGS. 3G-3I schematically illustrate the process of cutting the extrudate filled tray lengthwise to, 1) cut off the turned up lip portions 24a at the lengthwise outer edges, and 2) form the interior sections into two spacer strips 16 as shown in FIG. 3I. Optionally, only one spacer strip 16 may be formed, or more than two spacer strips 16 may be formed.

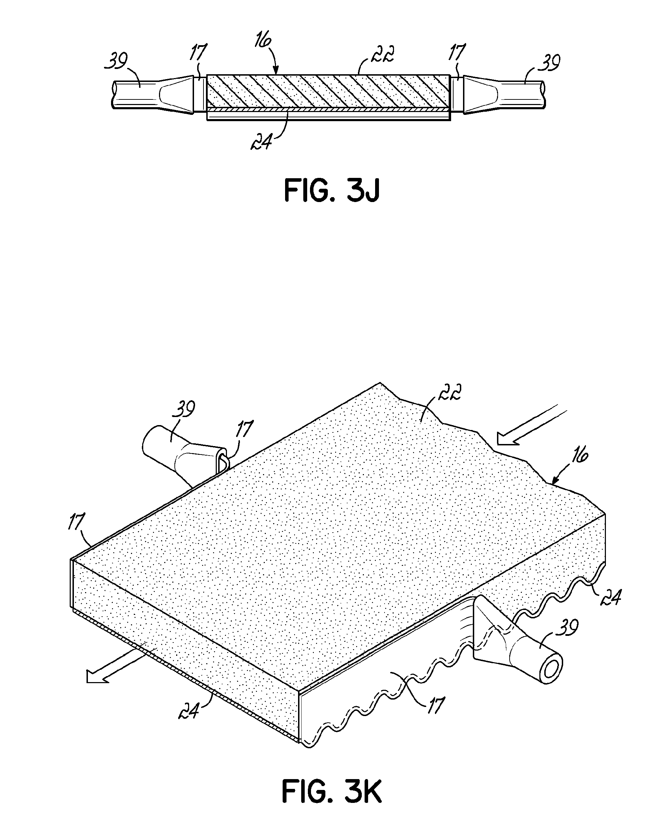

FIGS. 3J and 3K schematically illustrate adhesive 17 being applied to the outer edge surfaces of a spacer strip 16 formed as shown in FIG. 3G. This adhesive 17 is preferably a pressure sensitive adhesive (PSA), such as a conventional adhesive formed from an acrylic material, or a butyl based compound in accordance with an illustrative embodiment of the invention as further disclosed below. When using a butyl based PSA, the edges of the corrugated stainless steel vapor barrier 24 must be fully covered by the PSA to hermetically seal the stainless steel to the glazing layers 12.

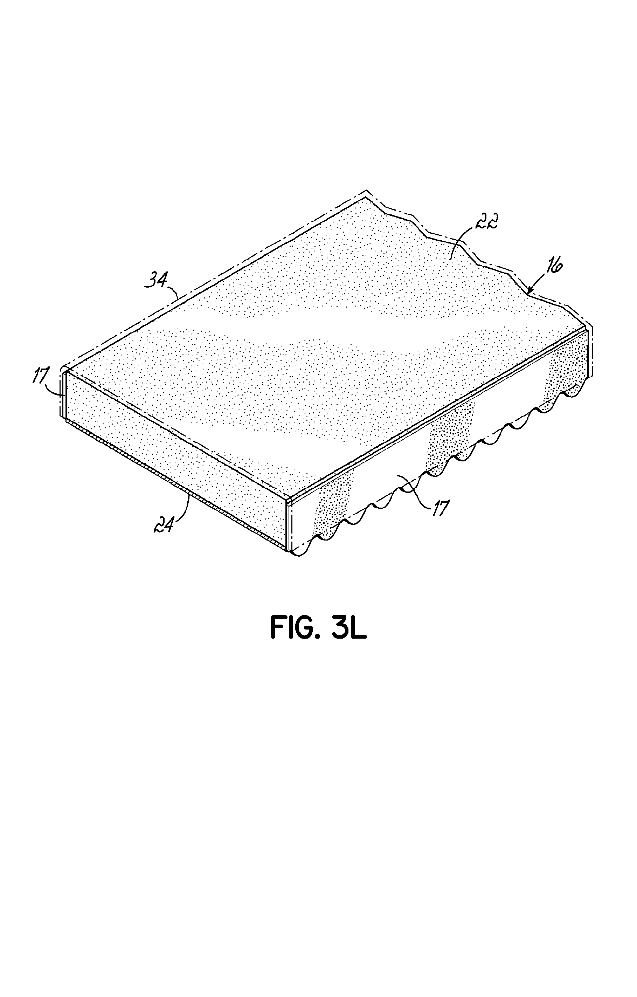

FIG. 3L is a perspective view showing a subsequent step of applying a peel away protective backing 34. It will be, perhaps, most efficient to use a single peel away backing 34 having a width great enough to extend along one side edge portion, thereby covering the adhesive 17 on one side, and then extending across the top of the spacer 16 and over the opposite side edge portion and the adhesive 17 on that side edge. Alternatively, separate peel away backing strips (not shown) may be applied along each side edge portion to protect and cover the pressure sensitive adhesive strips 17 separately.

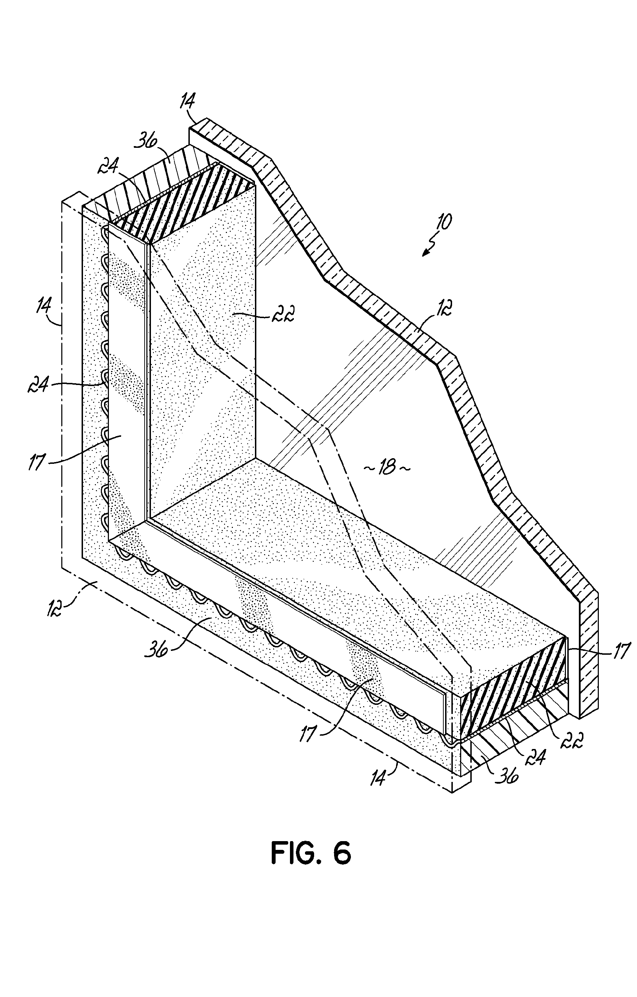

As discussed, FIG. 4 is a perspective view of a pair of translucent panels 12, such as for a window, in perspective and illustrating use of a window spacer 16 constructed in accordance with the present invention along peripheral edges thereof. FIG. 5 is a cross sectional view taken along line 5-5 of FIG. 4 and showing a spacer 16 as previously shown and described adhesive secured between the pair of spaced apart translucent or even transparent panels 12. In addition, a standard hot melt adhesive or other secondary sealant 36 may be used at the outer edge periphery 14 of the assembly, as shown in FIG. 5. FIG. 6 shows the same assembly in perspective view.

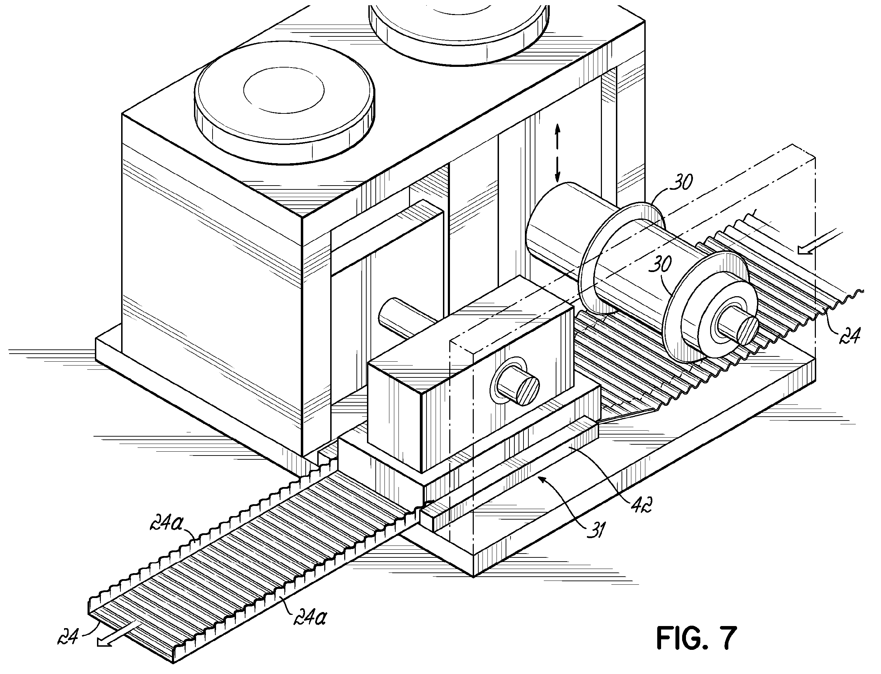

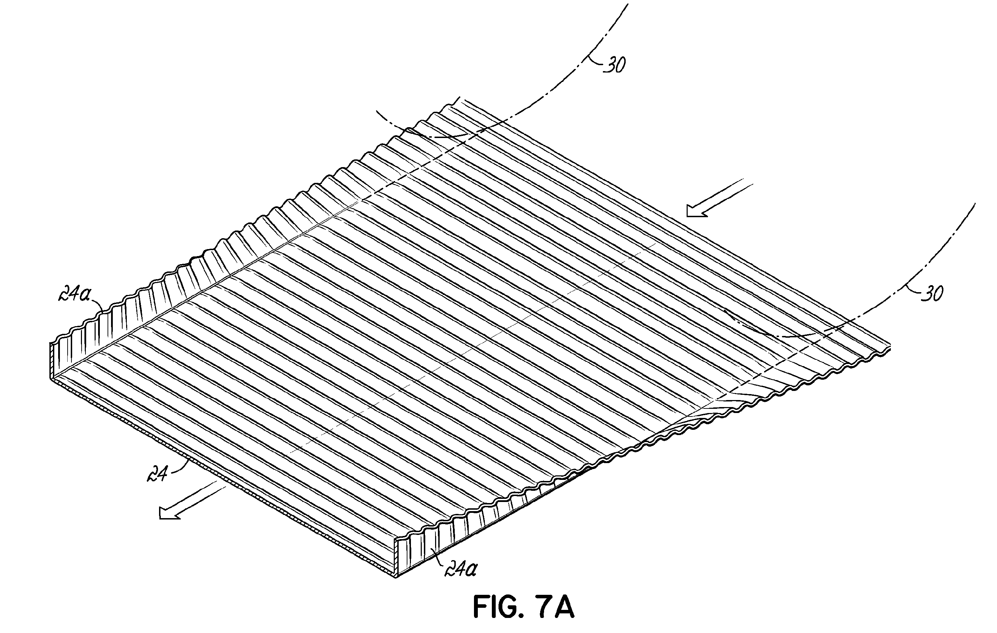

FIGS. 7 and 7A more specifically show the scoring and lip forming stations previously described in schematic fashion. More specifically, the scoring and lip forming stations are part of an assembly having vertical adjustment means to allow a desired amount of vertical adjustment to be made to the scoring blades 30 relative to their contact with the corrugated stainless steel 24 and to allow adjustment of the lip forming station 31, including a fixture 42 that utilizes camming surfaces on each side to gradually fold the outer lengthwise edge portions 24a from the horizontal orientations shown on the right hand side in FIGS. 7 and 7A to the vertical orientation shown on the left hand side in FIGS. 7 and 7A. As discussed in reference to FIG. 1, a puller 37 is used to pull the tray 24, 24a along the production line, although supplemental means for moving the product along the line may also be used.

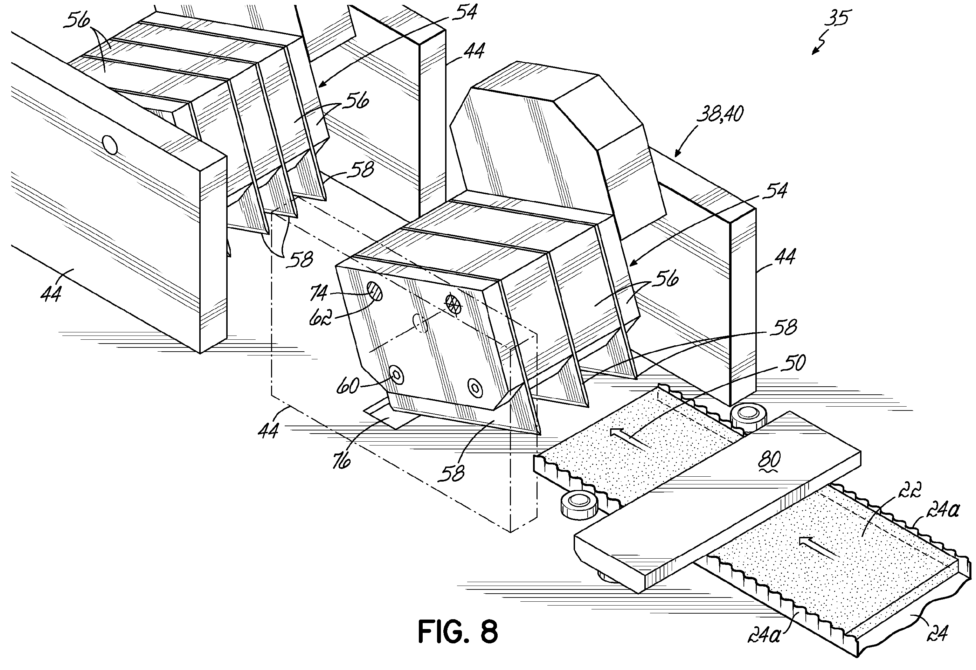

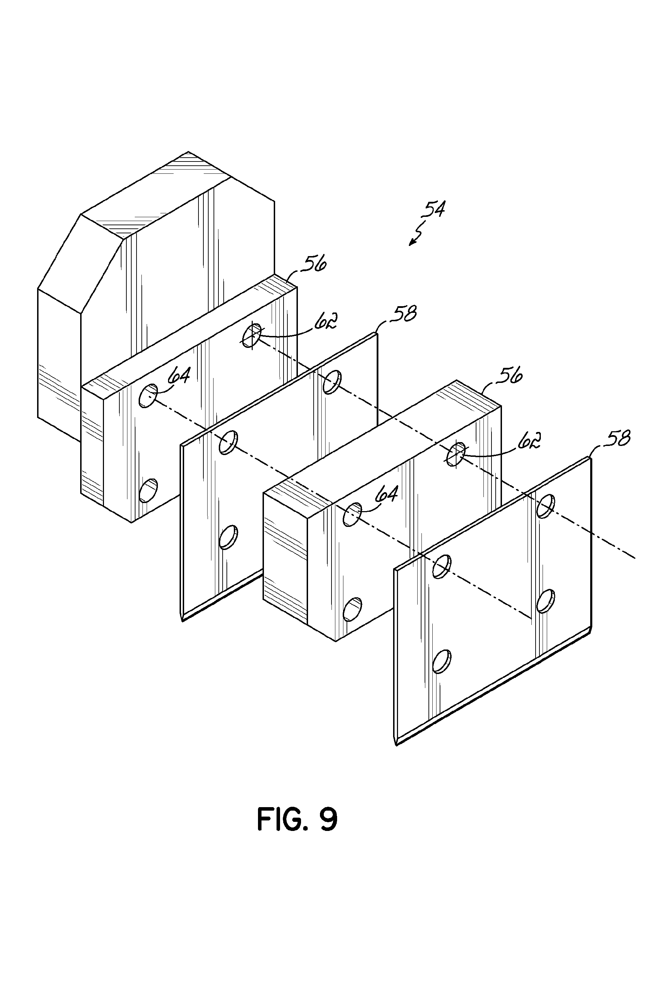

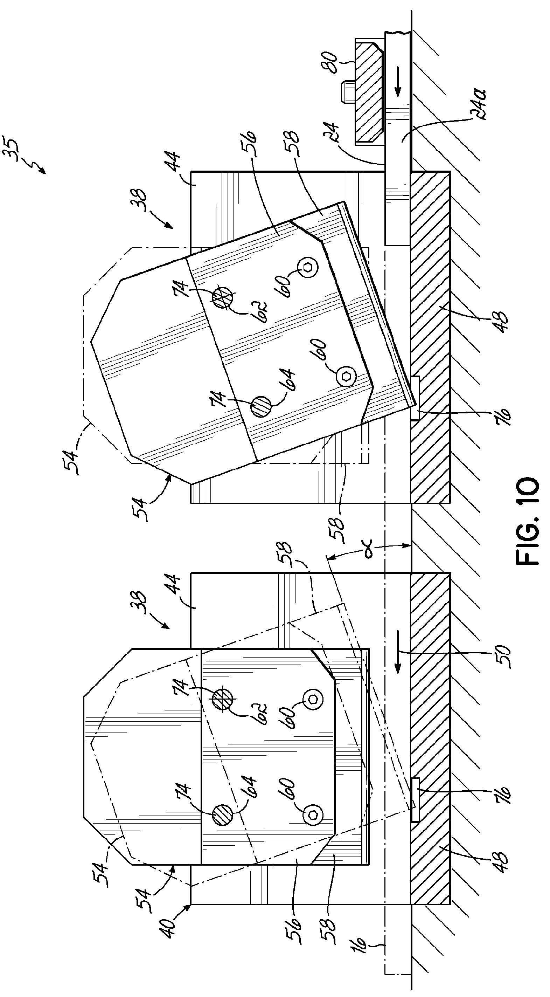

FIG. 8 illustrates a perspective view of the cutting station and specifically a housing placed along a cutting path 50 and including two sets of cutting assemblies or heads 54 having three blades 58. The outer two blades 58 are used to cut off the turned up lipped or lip portions 24a while the center blade 58 is used to cut the central portion of the vapor barrier 24 into two vapor barrier strips 16. FIG. 9 illustrates a partial disassembled view of a cutting head 54 while FIG. 10 is a side, cross sectional view illustrating one cutting head 54 angled downwardly into a position for cutting engagement with the extrudate 22 and vapor barrier 24 and the other cutting head 54 raised into a horizontal position out of any engagement with the extrudate 22 and vapor barrier 24.

The one or more cutting heads 54 are positioned in series along the cutting path 50 of the housing 40 and are configured to cut the extrudate 22 and vapor barrier 24 into one or more spacers 16 of an appropriate width, such as 12.7 mm or 15.9 mm (0.5 inch or 0.625 inch) spacers. While one embodiment of the cutting head 54 is shown in FIG. 10, it will be understood that other embodiments that are not part of the present invention may also be used, including, for example, lasers, water jets, and so forth.

With reference now to FIG. 10, the illustrated cutting head 54 is described in detail. The cutting head 54 is comprised of a plurality of blocks 56 where a cutting blade 58 may be positioned between any two successive blocks 56 in order to cut the extrudate 22 and sheet 24 to an appropriate width(s) for the desired spacer(s). The specific illustrated example includes two spacers 16 and two remnants 24a (FIG. 1). In other embodiments, any resultant remnant generated from the cuts may be disposed of accordingly. Of course, other dimensions and numbers of blocks 56 are possible and, furthermore, it would not be necessary to limit the number or size of the blocks 56 within a particular cutting head 54 to a uniform dimension. For example, a single cutting head 54 may include a combination of 6.35 mm and 15.9 mm (1/4 inch and 5/8 inch) blocks to simultaneously cut 6.35 mm and 15.9 mm (1/4 inch and 5/8 inch) spacers.

The blocks 56 may be constructed from any suitable rigid materials. Each block 56 includes a plurality of holes, i.e., at least one lower hole 60 (two are shown) configured to receive a screw (not shown) or other securement device for securing the cutting blade(s) 58 within blocks 56 of the cutting head 54. The blocks 56 further include two positioning holes 62, 64 configured to receive a pin 74 for securing the cutting head 54 to the housing 40 in either of a cut or no-cut position as subsequently discussed.

The cutting blade 58 may include any sufficiently sharp edge for cutting partially or fully cured extrudate 22. The particular illustrated embodiment includes a double-edged razor blade constructed from carbon steel, stainless steel, or other similar materials.

Turning again to FIG. 10, the cutting heads 54 are positioned and secured to one of a plurality of cutting head docking spaces within the housing 40 (FIG. 8). As shown, opposite walls 44 (only one each of two shown) of the housing 40, at each cutting head docking space include three holes, which are configured to provide two positions for each cutting head 54 within the given cutting head docking space, e.g., a cut position and a no-cut position. It will be understood that the holes (not shown) of the first and second walls 44 (one shown for each cutting head) are arranged and aligned such that the first and second walls are mirror images with respect to the other so as to maintain the cutting heads 54 in a parallel relationship; however, if another structure for securing the cutting heads within the docking spaces is used, then the mirror image relation may not be necessary.

In FIG. 10, one cutting head 54 is shown in the no-cut (horizontal) position and the other cutting head 54 is shown in the cut position. To achieve the no-cut position, the cutting head 54 is positioned within the respective docking space and the two positioning holes 62, 64 are aligned with appropriate holes (not shown) of the walls 44 (one shown). Through pins 74 (or other elements such as bolts, screws, dowel rods, and so forth) extend through the respectively aligned holes. The cutting blades 58 of the secured, horizontal cutting head 54 will not cut the extrudate 22.

To achieve the cut position, the cutting head 54 is positioned within the respective docking space and the two positioning holes 62, 64 are aligned with the appropriate holes (not shown) of the opposite walls 44 (one shown). Through pins 74 are positioned through the respectively aligned holes. Because the third, cut position hole (not shown) in the walls 44 (one shown) is downstream and angled away from the first hole, the cutting blade 58 (FIG. 10 will be angled downward within the housing 40 to engage the entering web of extrudate 22. Thus, the cutting blades 58 of the cutting head 54 will be secured in the angled orientation shown and will engage and cut the extrudate 22.

It will be readily appreciated that the length of the cutting blades 58 (FIG. 10) of each cutting head 54 must be sufficient to cut the extrudate 22 in a single pass through the cutter 38. Accordingly, the length of the cutting blade 58 must be greater than the height of the extrudate 22 divided by sin α, where α is the angle formed between the cutting blade 58 and the base 48 of the housing 40. Furthermore, and because the cutting blade 58 is longer than the height of the web of extrudate 22, each of the docking spaces may be associated with a blade sink 76 within the base 48 of the housing 40 to provide clearance for the blade 58.

As a result of this individual adjustability of the separate cutting heads 58, a plurality of cutting heads 58 may be positioned within the housing 40 while one or more of the plurality cuts the at least partially cured extrudate 22. By cutting the partially cured extrudate 22 instead of relying only on the accuracy of the die of the extrusion process, a spacer having more accurate spacer dimensions can be manufactured. That is, the dimensions of the spacer 16 are mechanically determined by the cutting blade spacing of the cutting head 54 and not by the irregular expansion of material passing through a die. This level of accuracy may be further used in other embodiments where a cutting head 54 may be constructed with a cutting blade 58 positioned to skim a layer (such as about 0.254 mm, that is 0.01 inch) off the extrudate 22 and provide a spacer having dimensions determined with a level of precision not achievable by extrusion alone. Therefore, the series of cutting heads 54 may be set forth within the housing 40 to cut one of more spacers 16 and/or trim spacers 16 to a nearly exact dimension.

Reconfiguration of the cutter 38 to manufacture a different style of spacer 16 may be accomplished by moving one cutting head into the no-cut position and dropping another cutting head into the cut position. More specifically, to move the cutting head 54 in the first docking space to the cut position, the pin 74 extending through the second hole 64 of the cutting head and the second hole of the walls 44, 46 is removed, the second hole 64 of the cutting head 54 is aligned with a third hole in the walls 44 (one shown) and the pin 74 is replaced into newly aligned holes. It will be appreciated that the pin 74 through the first aligned holes need not be removed, which allows the cutting head 54 to swing between the two positions.

In a similar manner, the cutting head 54 in the second docking space may be moved from the cut position to the no-cut position by removing the pin 74 from aligned holes. The second hole 64 of the cutting head 54 is aligned with a second hole (not shown) of the walls 44 (one shown), and the pin 74 is reinserted through newly aligned holes. Again, the pin 74 through the aligned first holes does not need to be removed.

Therefore, it will be readily appreciated that the cutting heads 54 may be selectively moved between the "cut" and "no-cut" positions during the manufacturing process. That is, extrusion may continue while reconfiguring the cutter 38, which greatly reduces the amount of down time of conventional extrusion methods (with the limitation that the extrudate 22 remains the same color throughout). Moreover, including an adjustable die in the manufacturing system 10 having a cutter in accordance with an embodiment of this invention provides a great number of manufacturing options for spacers that are otherwise only possible with significant system down time. A holder 80 ensures that the extrudate 22 and tray 24, 24a remain flat and stable during the cutting process.

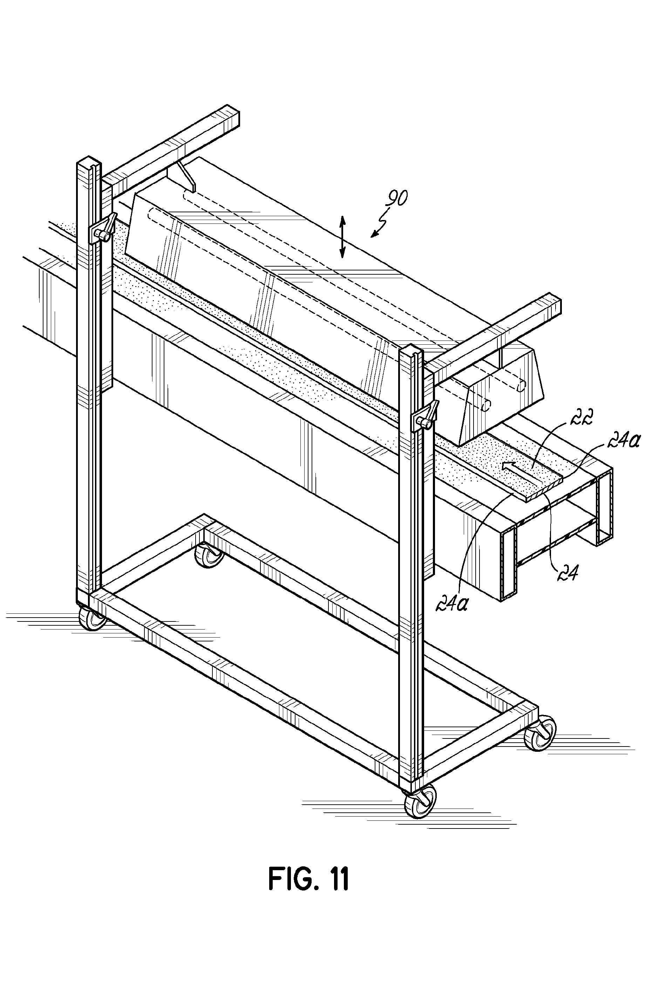

FIG. 11 illustrates an optional, modular or movable IR (infrared) heating lamp module 90 that may be wheeled into and out of position over the vapor barrier tray 24, 24a containing the extrudate 22 as it is curing. It will be appreciated that, depending on application and/or environment needs, more than one such module 90 may be used. This type of movable assembly 90 allows the operator to wheel the heating unit into and out of position as necessary based on the current temperature conditions in the plant or other manufacturing location so as to maintain the two part thermoset, desiccant containing material 22 at the optimal temperature for curing.

The corrugated, stainless steel tray 24 may be coated with a polyurethane black extrudate 22 in one aspect of this illustrative embodiment, as mentioned. The following provides a more specific description. The polyurethane may be the reaction product of one or more di- or polyisocyanates and one or more di- or polyols. The relative amounts of isocyanate compound to alcohol compound may range from 1:3 to 1:4, based on the weight of the two components.

The polyurethane formulation may include a desiccant, which may be added to the formulation in an amount of about 30 weight % to about 65 weight % based on the total weight of the formulation. For instance, the desiccant may be added to the formulation in an amount of about 30 weight %, 31 weight %, 32 weight %, 33 weight %, 34 weight %, 35 weight %, 36 weight %, 37 weight %, 38 weight %, 39 weight %, 40 weight %, 41 weight %, 42 weight %, 43 weight %, 44 weight %, 45 weight %, 46 weight %, 47 weight %, 48 weight %, 49 weight %, 50 weight %, 51 weight %, 52 weight %, 53 weight %, 54 weight %, 55 weight %, 56 weight %, 57 weight %, 58 weight %, 59 weight %, 60 weight %, or any fractional part thereof. Exemplary desiccants include 3Å molecular sieves, 13X molecular sieves, calcium oxide, silica gel, and/or a combination of at least two of the foregoing.

The polyurethane formulation may also include other components. For instance, the polyurethane formulation may include plasticizers, UV absorbers and/or blockers, adhesion promoters, and/or pigments. The pigment may be any desired color, such as black. It is within the abilities of one of ordinary skill in the art to select the additional components and amounts of those components of the polyurethane formulation to be used for the particular application.

A pressure sensitive adhesive may be applied to the sides of the spacer. Pressure sensitive adhesives are known and it is within the abilities of one of ordinary skill in the art to select an appropriate pressure sensitive adhesive for the particular application.

One additional option of the present invention is the use of a hot melt butyl pressure sensitive adhesive. When such a hot melt butyl pressure sensitive adhesive is applied on the side of the spacer at about 4 mills to about 8 mills thick, a T-spacer such as that produced by Quanex Building Products Corp. is not necessary. Instead, only a standard rectangular spacer is required. One way to form an hermetic seal is to ensure that the butyl based pressure sensitive adhesive flows across the corrugated stainless steel and continuously, hermetically seals to the stainless steel vapor barrier edge corrugations, and optionally flows and extrudes around the corrugations and onto the back side of the vapor barrier at least about 0.040" or 1 mm.

An exemplary hot melt butyl pressure sensitive adhesive includes a chlorobutyl elastomer, a styrene butadiene rubber, a tackifying resin, polyisobutylene, and an antioxidant. The chlorobutyl elastomer may be added in an amount of about 25 weight % to about 50 weight % based on the total weight of the formulation and may include, for instance, Exxon^{™} 1066, from ExxonMobil Chemical, Irving, Texas, USA. For instance, the chlorobutyl elastomer may be added in an amount of 25 weight %, 26 weight %, 27 weight %, 28 weight %, 29 weight %, 30 weight %, 31 weight %, 32 weight %, 33 weight %, 34 weight %, 35 weight %, 36 weight %, 37 weight %, 38 weight %, 39 weight %, 40 weight %, 41 weight %, 42 weight %, 43 weight %, 44 weight %, 45 weight %, 46 weight %, 47 weight %, 48 weight %, 49 weight %, 50 weight %, or any fractional part thereof.

The styrene butadiene rubber may be added in an amount of about 15 weight % to about 45 weight % based on the total weight of the formulation and may include, for instance, a K-Resin^{®}, from the Chevron Phillips Chemical Company of Woodlands, Texas, USA. For instance, the styrene butadiene rubber may be added in an amount of 15 weight %, 16 weight %, 17 weight %, 18 weight %, 19 weight %, 20 weight %, 21 weight %, 22 weight %, 23 weight %, 24 weight %, 25 weight %, 26 weight %, 27 weight %, 28 weight %, 29 weight %, 30 weight %, 31 weight %, 32 weight %, 33 weight %, 34 weight %, 35 weight %, 36 weight %, 37 weight %, 38 weight %, 39 weight %, 40 weight %, 41 weight %, 42 weight %, 43 weight %, 44 weight %, 45 weight %, or any fractional part thereof.

The tackifying resin may be added in an amount of about 8 weight % to about 25 weight % based on the total weight of the formulation and may include, for instance, Nevtac^{®} resins of the Neville Chemical Company of Pittsburg, Pennsylvania, USA. For instance, the tackifying resin may be added in an amount of 8 weight %, 9 weight %, 10 weight %, 11 weight %, 12 weight %, 13 weight %, 14 weight %, 15 weight %, 16 weight %, 17 weight %, 18 weight %, 19 weight %, 20 weight %, 21 weight %, 22 weight %, 23 weight %, 24 weight %, 25 weight %, or any fractional part thereof.

The polyisobutylene may be added in an amount of about 3 weight % to about 20 weight % based on the total weight of the formulation, and may include, for instance, polyisobutylene from Soltex of Houston, Texas, USA. For instance, the polyisobutylene may be added in an amount of 3 weight %, 4 weight %, 5 weight %, 6 weight %, 7 weight %, 8 weight %, 9 weight %, 10 weight %, 11 weight %, 12 weight %, 13 weight %, 14 weight %, 15 weight %, 16 weight %, 17 weight %, 18 weight %, 19 weight %, 20 weight %, or any fractional part thereof.

The antioxidant may be added in an amount of about 0.2 weight % to about 0.5 weight % based on the total weight of the formulation and may include, for instance, Songnox^{®} 1024 from RT Vanderbilt of Norwalk, CT, USA. For instance, the antioxidant may be added in an amount of 0.2 weight %, 0.3 weight %, 0.4 weight %, 0.5 weight %, or any fractional part thereof.

The identities of the chlorobutyl elastomer, styrene butadiene rubber, tackifying resin, and antioxidant are not limited to the exemplary compounds provided above, and it is within the abilities of one of ordinary skill in the art to select the appropriate components and amounts of those components to be used in the formulation of the pressure sensitive adhesive for the particular application.

### Examples

The present invention will be further appreciated in view of the following exemplary formulations.

Formulation A is a polyurethane formulation used to coat the spacer and is prepared in accordance with Table 1. All amounts reported in Table 1 are weight percent values based on the total weight of the formulation, with the exception of the DABCO^{®} T-12 catalyst, which is added in a catalytic amount.

**TABLE 1**

| Component | Source | Amount (w/w %) | Function |
|---|---|---|---|
| Poly THF 650 | DuPont, Mobile, AL, USA | 33.4 | Polyol |
| Voranol^{™} 230-660 | Dow Chem., Midland, MI, USA | 6.7 | Polyol |
| Isonate^{™} 143L | Dow Chem., Midland, MI, USA | 10 | Isocyanate |
| Benzoflex^{™} 9-88-G | Eastman Chem., Kingsport, TN, USA | 3.7 | Plasticizer |
| 3Å Desiccant | Nedex, Istanbul, Turkey | 43.8 | Desiccant |
| Black Pigment | Cromaflo, Ashtabula, OH, USA | 1.8 | Pigment |
| Tinuvin^{®} 328 | BASF, Mobile, AL, USA | 0.1 | UV absorber and blocker |
| Dynasylan^{®} AMEO | Evonik, Charlotte, NC, USA | 0.5 | Adhesion promoter |
| Dabco^{®} T-12 | Air Products, Allentown, PA, USA | --¹ | Catalyst |

| | | | |
|---|---|---|---|
| ¹ Dabco^{®} T-12 is added in a catalytic amount. For instance, in a batch with a total weight of approximately 540 pounds, approximately 110 cm³ of Dabco^{®} T-12 are added. | | | |

Formulation B is a pressure sensitive adhesive applied to the sides of the spacer and is prepared in accordance with Table 2. All amounts reported in Table 2 are weight percent values based on the total weight of the formulation.

**TABLE 2**

| Component | Amount (w/w %) |
|---|---|
| Chlorobutyl elastomer | 31.15 |
| Styrene butadiene rubber | 31.15 |
| Tackifying Resin | 18.7 |
| Polyisobutylene | 18.7 |
| Antioxidant | 0.3 |

## Claims

1. A spacer (16) comprising a two component flexible thermoset polymer (22), one component carrying a desiccant powder, and the other component being the catalyst for cure, wherein the polymer is formed without the use of a traditional energy intensive extrusion, heat curing, and heat baking process; wherein the components are mixed and cast directly on to at least one of a vapor barrier web of corrugated sheet material (24) and a non-metal multi-layer vapor barrier web; wherein side edges of the vapor barrier web are turned up to form lipped edges (24a) for containing the mixed polymer material to fill to a consistent desired thickness level before cure; to form a cured and continuous web; wherein the cured and continuous web has final cure assistance through the addition of modular radiant heat equipment from above; wherein the cured and continuous web of desiccated spacer material enters a cutting head (54) with static blades (58) that are spacer width adjustable from at least 5mm to 50mm widths, whereby the cured and continuous web of desiccated spacer material is cut to at least 5mm to 50mm widths to form plural such spacers (16).

2. The spacer of claim 1 wherein the polymer (22) further comprises a polyurethane.

3. The spacer of claim 2 wherein the polyurethane material further comprises:
a reaction product of one or more di- or polyisocyanates and one or more di-or polyols, wherein a ratio of an amount of the one or more di- or polyisocyanates to an amount of the one or more di- or polyols ranges from 1:3 to 1:4, based on the combined weight of the one or more di- or polyisocyanates and one or more di- or polyols;
a desiccant; and
optionally one or more plasticizers, one or more UV absorbers and/or blockers, one or more adhesion promoters, one or more pigments, or a combination thereof.

4. A method of producing a flexible thermoset polymer spacer body, without the use of a traditional energy intensive extrusion, heat curing, and heat baking process, by using a two component polymer (22); one component carrying a desiccant powder, and the other component being the catalyst for cure, wherein the two component polymer (22) is mixed and cast directly on to at least one of a vapor barrier web of corrugated sheet material (24) and a non-metal multi-layer vapor barrier web; wherein side edges of the vapor barrier web are turned up to form lipped edges (24a) for containing the mixed polymer material to fill to a consistent desired thickness level before cure; to form a cured and continuous web of desiccated spacer material, wherein the cured and continuous web has final cure assistance through the addition of modular radiant heat equipment from above; and wherein the cured and continuous web of desiccated spacer material enters a cutting head (54) with static blades (58) that are spacer width adjustable from at least 5mm to 50mm widths whereby the cured and continuous web of desiccated spacer material is cut to at least 5mm to 50mm widths to form plural such spacers (16).

5. The method of claim 4 wherein the cutting head (54) has two independent sets of knives so that one set can be introduced to the spacer web for spacer cutting and sizing to new sizes, while the other set of knives are moved away, thus allowing changes of spacer width production in continuous fashion without stopping the conveyor or production line.

6. The method of claims 4 or 5 wherein the flexible spacer is level wound or coiled on spools for vacuum packaging to customer glass fabricators.

## Patentansprüche

1. Abstandshalter (16), der ein flexibles duroplastisches Zweikomponentenpolymer (22) aufweist, bei dem eine Komponente ein Sikkativpulver trägt und die andere Komponente der Katalysator für die Aushärtung ist, wobei das Polymer ohne Verwendung eines herkömmlichen energieintensiven Extrusions-, Warmaushärtungs- und thermischen Aushärtungsprozesses gebildet wird; wobei die Komponenten gemischt und direkt auf mindestens eine von einer Dampfsperrbahn aus gewelltem Plattenmaterial (24) und einer nichtmetallischen mehrschichtigen Dampfsperrbahn gegossen werden; wobei Seitenränder der Dampfsperrbahn nach oben gedreht sind, so dass sie lippenförmige Ränder (24a) zum Einfassen des gemischten Polymermaterials bilden, um es vor dem Aushärten auf eine konsistente gewünschte Schichtdicke aufzufüllen, um eine ausgehärtete und kontinuierliche Bahn zu bilden; wobei die ausgehärtete und kontinuierliche Bahn eine Endaushärtungsunterstützung durch den Zusatz einer modularen Strahlungswärmeausrüstung von oben aufweist; wobei die ausgehärtete und kontinuierliche Bahn aus getrocknetem Abstandshaltermaterial in einen Schneidkopf (54) mit feststehenden Klingen (58) eintritt, die auf eine Abstandshalterbreite von mindestens 5 mm bis 50 mm Breite einstellbar sind, wodurch die ausgehärtete und kontinuierliche Bahn aus getrocknetem Abstandshaltermaterial auf Breiten von mindestens 5 mm bis 50 mm geschnitten wird, um mehrere solcher Abstandshalter (16) zu bilden.

2. Abstandshalter nach Anspruch 1, wobei das Polymer (22) ferner ein Polyurethan aufweist.

3. Abstandshalter nach Anspruch 2, wobei das Polyurethanmaterial ferner Folgendes aufweist:
ein Reaktionsprodukt aus einem oder mehreren Di- oder Polyisocyanaten und einem oder mehreren Di- oder Polyolen, wobei das Verhältnis einer Menge des einen oder der mehreren Di-oder Polyisocyanate zu einer Menge des einen oder der mehreren Di- oder Polyole im Bereich von 1:3 bis 1:4 liegt, bezogen auf das Gesamtgewicht des einen oder der mehreren Di- oder Polyisocyanate und des einen oder der mehreren Di- oder Polyole;
ein Sikkativ; und,
wahlweise, einen oder mehrere Weichmacher, einen oder mehrere UV-Absorber und/oder -Blocker, einen oder mehrere Haftvermittler, ein oder mehrere Pigmente oder eine Kombination davon.

4. Verfahren zur Herstellung eines flexiblen Abstandhalterkörpers aus duroplastischem Polymer ohne die Verwendung eines herkömmlichen energieintensiven Extrusions-, Warmaushärtungs- und thermischen Aushärtungsprozesses durch Verwendung eines Zweikomponentenpolymers (22); wobei eine Komponente ein Sikkativpulver trägt und die andere Komponente der Katalysator für die Aushärtung ist, wobei das Zweikomponentenpolymer (22) gemischt und direkt auf mindestens eine von einer Dampfsperrbahn aus gewelltem Plattenmaterial (24) und einer nichtmetallischen mehrschichtigen Dampfsperrbahn gegossen wird; wobei Seitenränder der Dampfsperrbahn nach oben gedreht sind, so dass sie lippenförmige Ränder (24a) zum Einfassen des gemischten Polymermaterials bilden, um es vor dem Aushärten auf eine konsistente gewünschte Schichtdicke aufzufüllen, um eine ausgehärtete und kontinuierliche Bahn des getrockneten Abstandshaltermaterials zu bilden, wobei die ausgehärtete und kontinuierliche Bahn eine Endaushärtungsunterstützung durch den Zusatz einer modularen Strahlungswärmeausrüstung von oben aufweist; und wobei die ausgehärtete und kontinuierliche Bahn aus getrocknetem Abstandshaltermaterial in einen Schneidkopf (54) mit feststehenden Klingen (58) eintritt, die auf eine Abstandshalterbreite von mindestens 5 mm bis 50 mm Breite einstellbar sind, wodurch die ausgehärtete und kontinuierliche Bahn aus getrocknetem Abstandshaltermaterial auf Breiten von mindestens 5 mm bis 50 mm geschnitten wird, um mehrere solcher Abstandshalter (16) zu bilden.

5. Verfahren nach Anspruch 4, wobei der Schneidkopf (54) zwei unabhängige Messersätze aufweist, so dass ein Satz zum Schneiden des Abstandshalters und Zuschneiden auf neue Größen in die Abstandshalterbahn eingeführt werden kann, während der andere Messersatz wegbewegt wird, so dass die Produktion von Abstandshalterbreiten ohne Anhalten der Förder- oder Produktionsanlage kontinuierlich geändert werden kann.

6. Verfahren nach Anspruch 4 oder 5, wobei der flexible Abstandshalter flach auf Spulen gewickelt oder aufgerollt wird zur Vakuumverpackung für Glasherstellerkunden.

## Revendications

1. Espaceur (16) comprenant un polymère thermodurci flexible à deux composants (22), un composant portant une poudre desséchante, et l'autre composant étant le catalyseur de durcissement, dans lequel le polymère est formé sans utiliser un procédé d'extrusion traditionnel intensif en énergie, durcissement thermique et cuisson thermique ; dans lequel les composants sont mélangés et coulés directement sur au moins l'une d'une nappe pare-vapeur de matériau en tôle ondulée (24) et une nappe pare-vapeur multicouche non métallique ; dans lequel les bords latéraux de la nappe pare-vapeur sont relevés pour former des rebords (24a) pour contenir le matériau polymère mélangé afin d'obtenir un niveau d'épaisseur désirée consistante avant le durcissement ; pour former une nappe durcie et continue ; dans lequel le durcissement final de la nappe durcie et continue est aidé par l'addition d'un équipement modulaire de chaleur rayonnante d'en haut ; dans lequel la nappe durcie et continue de matériau d'espaceur desséché entre dans une tête de coupe (54) munie de lames statiques (58) qui sont réglables à la largeur d'espaceur de largeurs d'au moins 5 mm à 50 mm, en vertu de quoi la nappe durcie et continue de matériau d'espaceur desséché est coupée en des largeurs d'au moins 5 mm à 50 mm pour former plusieurs tels espaceurs (16).

2. Espaceur selon la revendication 1, dans lequel le polymère (22) comprend en outre un polyuréthane.

3. Espaceur selon la revendication 2, dans lequel le matériau polyuréthane comprend en outre :
un produit de réaction d'un ou plusieurs di-isocyanates ou poly-isocyanates et d'un ou plusieurs di-polyols ou polyols, dans lequel un rapport d'une quantité de l'un ou plusieurs di-isocyanates ou poly-isocyanates à une quantité de l'un ou plusieurs di-polyols ou polyols va de 1:3 à 1:4, sur la base du poids combiné de l'un ou plusieurs di-isocyanates ou poly-isocyanates et de l'un ou plusieurs di-polyols ou polyols ;
un desséchant ; et
optionnellement un ou plusieurs plastifiants, un ou plusieurs absorbeurs et/ou bloqueurs d'UV, un ou plusieurs promoteurs d'adhésion, un ou plusieurs pigments, ou une combinaison des mêmes.

4. Procédé de production d'un corps d'espaceur en polymère thermodurci flexible, sans utiliser un procédé d'extrusion traditionnel intensif en énergie, durcissement thermique et cuisson thermique, en utilisant un polymère à deux composants (22) ; un composant portant une poudre desséchante, et l'autre composant étant le catalyseur de durcissement, dans lequel les deux composants polymères (22) sont mélangés et coulés directement sur au moins l'une d'entre une nappe pare-vapeur de matériau en tôle ondulée (24) et une nappe pare-vapeur multicouche non métallique ; dans lequel les bords latéraux de la nappe pare-vapeur sont relevés pour former des rebords (24a) pour contenir le matériau polymère mélangé afin d'obtenir un niveau d'épaisseur désirée consistante avant le durcissement ; pour former une nappe durcie et continue de matériau d'espaceur desséché ; dans lequel le durcissement final de la nappe durcie et continue est aidé par l'addition d'un équipement modulaire de chaleur rayonnante d'en haut ; et dans lequel la nappe durcie et continue de matériau d'espaceur desséché entre dans une tête de coupe (54) munie de lames statiques (58) qui sont réglables à la largeur de l'espaceur de largeurs d'au moins 5 mm à 50 mm, en vertu de quoi la nappe durcie et continue de matériau d'espaceur desséché est coupée en des largeurs d'au moins 5 mm à 50 mm pour former plusieurs tels espaceurs (16).

5. Procédé selon la revendication 4, dans lequel la tête de coupe (54) a deux jeux de couteaux indépendants de sorte qu'un jeu peut être introduit dans la nappe d'espaceur pour couper des espaceurs et les dimensionner à de nouvelles tailles, tandis que l'autre jeu de couteaux est écarté, permettant ainsi des changements de production dans la largeur des espaceurs de manière continue sans arrêter le convoyeur ou la chaîne de production.

6. Procédé selon les revendications 4 ou 5, dans lequel l'espaceur flexible est enroulé de manière uniforme ou enroulé sur des bobines pour emballage sous vide aux fabricants de verre clients.
